(19) Europäisches Patentamt
European Patent Office
Office européen des brevets

(11) Veröffentlichungsnummer: **0 357 553**
**A2**

(12) # EUROPÄISCHE PATENTANMELDUNG

(21) Anmeldenummer: **89810622.4**

(22) Anmeldetag: **22.08.89**

(51) Int. Cl.[5]: **A 01 N 57/20**
//(A01N57/20,43:70,25:30,
25:04)

(30) Priorität: **30.08.88 CH 3215/88**

(43) Veröffentlichungstag der Anmeldung:
**07.03.90 Patentblatt 90/10**

(84) Benannte Vertragsstaaten:
**AT BE CH DE ES FR GB GR IT LI LU NL SE**

(71) Anmelder: **CIBA-GEIGY AG**
**Klybeckstrasse 141**
**CH-4002 Basel (CH)**

(72) Erfinder: **Gütling, Hans Norbert, Dr.**
**Erlenstrasse 6B**
**D-7887 Laufenburg-Binzgen (DE)**

**Kundel, Peter, Dr.**
**Albert-Gersbach-Allee 5**
**D-7880 Bad Säckingen (DE)**

(54) **Herbizide Mischungen.**

(57) Fliessfähige, herbizide Zusammensetzungen, die eine Wirkstoffkombination aus Glyphosate und einem Triazinherbizid enthalten, bilden stabile wässrige Suspensionen, wenn die Tensidkomponenten der Zubereitung aus einem anionischen Tensid aus der Reihe der hierin beschriebenen Formeln III, IV oder V und einem kationischen Tensid der Formel VI bestehen.

EP 0 357 553 A2

## Beschreibung

### Herbizide Mischungen

Die vorliegende Erfindung betrifft eine fliessfähige, herbizide Zusammensetzung in Form einer wässrigen Suspension, die eine Wirkstoffmischung aus Glyphosate und einem Triazinherbizid und ein neues Tensidgemisch enthält.

Glyphosate und Triazinherbizide, Verfahren zu deren Herstellung und ihre Wirkung als Herbizide sind seit langem aus der Literatur bekannt.

Im Handel befinden sich Gemische dieser beiden Wirkstoffklassen als wässrige Dispersionen. Die darin enthaltenen Wirkstoffkombinationen unterscheiden sich in der mengenmässigen Zusammensetzung der Einzelwirkstoffe je nach Anwendungskultur, -art, -klima und regionaler Unkrautpopulation.

Mit den üblichen bisher verwendeten oberflächenaktiven Formulierungshilfsstoffen wie Dispergatoren, Emulgatoren und Tensiden gelingt jeweils eine niedrig konzentrierte Kombination der beiden Wirkstoffkomponenten. Bei höheren Wirkstoffkonzentrationen insbesondere von Glyphosate bzw. dessen Salz, befriedigen die erzielten Formulierungen bezüglich ihrer Stabilität und Handhabbarkeit nicht.

Es besteht deshalb das Bedürfnis, über eine Formulierungsmöglichkeit zu verfügen, die alle biologisch und technologisch gewünschten Aenderungen im Wirkstoffanteil einer fliessfähigen höher konzentrierten Suspension, insbesondere eine Erhöhung des Glyphosate-Anteils zulässt. Aus ökonomischer Sicht ist ein hochkonzentriertes Mittel von Vorteil, da dadurch Lager-, Transport- und Verpackungskosten eingespart werden können.

Erfindungsgemäss wird deshalb vorgeschlagen, ein fliessfähiges, herbizides Mittel in Form einer Wirkstoffsuspension, das als wirksame Komponenten einerseits N-Phosphonomethylglycin oder dessen wasserlösliches Salz und andererseits ein Triazinherbizid enthält, so zusammenzusetzen, dass es

5 bis 40 Gewichts-% N-Phosphonomethylglycin der Formel I

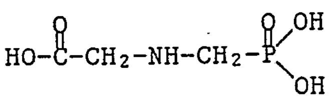 (I)

oder dessen wasserlösliches Salz;

8 bis 50 Gewichts.-% eines Triazinherbizids der Formel II

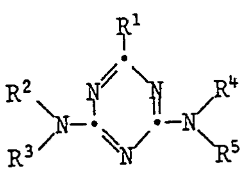 (II)

worin

$R^1$ Chlor, Methoxy, Methylthio oder Aethylthio,

$R^2$ und $R^4$ unabhängig voneinander Wasserstoff oder $C_1$-$C_4$-Alkyl,

$R^3$ $C_2$-$C_4$-Alkyl und

$R^5$ $C_1$-$C_5$-Alkyl, $C_3$-$C_4$-Cycloalkyl oder durch Cyan oder Methoxy substituiertes $C_1$-$C_4$-Alkyl bedeuten;

0,1 bis 10 Gewichts-% eines anionischen Tensids der Formel III

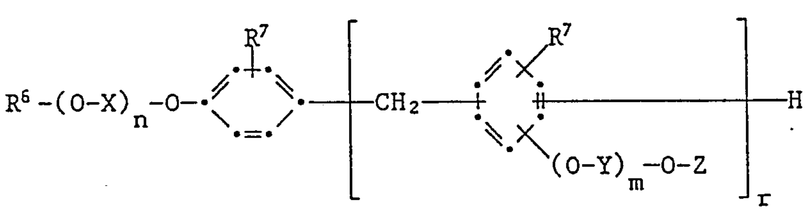 (III)

worin

$R^6$ einen Rest

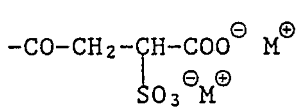 oder 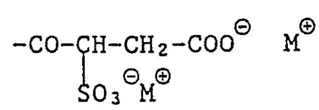 ,

X und Y unabhängig voneinander eine Aethylen- oder Propylenbrücke,

$R^7$ einen geradkettigen oder verzweigten $C_6$-$C_{14}$-Alkylrest,

Z Wasserstoff oder einen unter $R^6$ definierten Rest,

m und n unabhängig voneinander Zahlen von 2 bis 25,

r eine Zahl von 1 bis 9, und
$M^{\oplus}$ ein Proton, ein Alkalimetallkation oder ein Aequivalent eines Erdalkalimetallkations bedeuten; welches man erhält, indem man in an sich bekannter Weise Monoalkylphenole der Formel

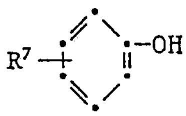

mit Formaldehyd im Molverhältnis 2:1 bis 10:9 in Gegenwart von sauren Katalysatoren zu mehrkernigen Novolakharzen kondensiert, diese in Gegenwart von alkalischen Katalysatoren mit 2 bis 25 Mol Alkylenoxid je Mol eingesetzten Monoalkylphenols umsetzt, die freien Hydroxylgruppen der erhaltenen Oxalkylierungsprodukte ganz oder teilweise mit Maleinsäureanhydrid verestert und danach die erhaltenen Maleinsäurehalbester in wässriger Phase mit Salzen der schwefligen Säure zu den Sulfobernsteinsäurehalbestern der Formel III umsetzt;
oder eines anionischen Tensids der Formel IV

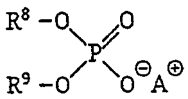

(IV)

worin $R^8$ einen Rest der Formel

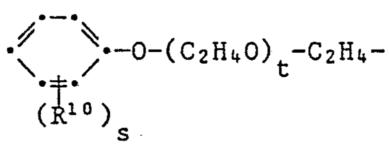

bedeutet,
$R^9$ die gleiche Bedeutung wie $R^8$ hat oder für Wasserstoff steht und $A^{\oplus}$ ein Proton oder ein Alkalimetall- oder Triäthanolammoniumkation bedeutet, wobei s für eine Zahl von 1 bis 4, t für eine Zahl von 2 bis 40 und $R^{10}$ für Wasserstoff, Styryl oder $C_3$-$C_{10}$-Alkyl stehen;
oder eines anionischen Tensids der Formel V

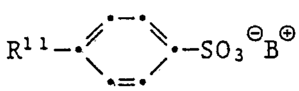

(V)

worin
$R^{11}$ für $C_8$-$C_{35}$-Alkyl und
$B^{\oplus}$ für ein Alkalimetallkation oder ein Ammoniumkation der Formel

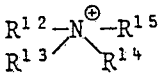

worin $R^{12}$, $R^{13}$, $R^{14}$ und $R^{15}$ unabhängig voneinander Wasserstoff, $C_1$-$C_4$-Alkyl, oder $C_1$-$C_4$-Hydroxyalkyl bedeuten, stehen;
0,1 bis 10 Gewichts-% eines kationischen Tensids der Formel VI

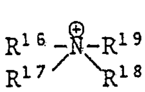 $E^{\ominus}$ (VI)

worin
$R^{16}$ und $R^{17}$ unabhängig voneinander $C_1$-$C_4$-Alkyl,
$R^{18}$ $C_1$-$C_{35}$-Alkyl, Phenyl, Benzyl oder ein- oder mehrfach ungesättigtes $C_3$-$C_{35}$-Alkenyl;
$R^{19}$ $C_8$-$C_{35}$-Alkyl, Phenyl, Benzyl oder ein- oder mehrfach ungesättigtes $C_3$-$C_{35}$-Alkenyl, und
$E^{\ominus}$ ein Halogenanion, ein Nitratanion oder ein Aequivalent eines Sulfat-oder Phosphatanions bedeuten; und ad 100 Gewichts-% Wasser enthält.

Bevorzugte herbizide Mittel sind so zusammengesetzt, dass sie
5 bis 40 Gewichts-% N-Phosphonomethylglycin der Formel I

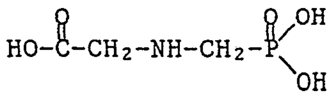 (I)

oder dessen Isopropylammoniumsalz;
8 bis 50 Gewichts.-% eines Triazinherbizids der Formel II

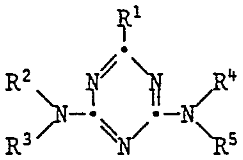 (II)

worin
$R^1$ Chlor, Methoxy, Methylthio oder Aethylthio,
$R^2$ und $R^4$ unabhängig voneinander Wasserstoff oder $C_1$-$C_4$-Alkyl,
$R^3$ $C_1$-$C_4$-Alkyl und
$R^5$ $C_1$-$C_5$-Alkyl, $C_3$-$C_4$-Cycloalkyl oder durch Cyan oder Methoxy substituiertes $C_1$-$C_4$-Alkyl bedeuten;
0,1 bis 10 Gewichts-% eines anionischen Tensids der Formel III

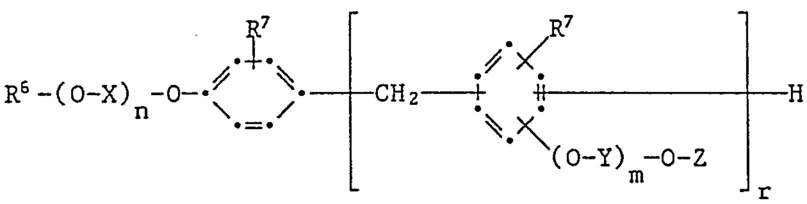 (III)

worin
$R^6$ einen Rest

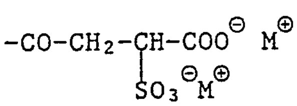 oder 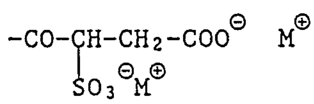 ,

X und Y unabhängig voneinander eine Aethylen- oder Propylenbrücke,
$R^7$ einen geradkettigen oder verzweigten $C_6$-$C_{14}$-Alkylrest,
Z Wasserstoff oder einen unter $R^6$ definierten Rest,
m und n unabhängig voneinander Zahlen von 2 bis 25,
r eine Zahl von 1 bis 9, und
$M^\oplus$ ein Proton, ein Alkalimetallkation oder ein Aequivalent eines Erdalkalimetallkations bedeuten; welches man erhält, indem man in an sich bekannter Weise Monoalkylphenole der Formel

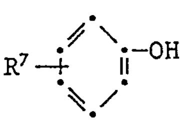

mit Formaldehyd im Molverhältnis 2:1 bis 10:9 in Gegenwart von sauren Katalysatoren zu mehrkernigen Novolakharzen kondensiert, diese in Gegenwart von alkalischen Katalysatoren mit 2 bis 25 Mol Alkylenoxid je Mol eingesetzten Monoalkylphenols umsetzt, die freien Hydroxylgruppen der erhaltenen Oxalkylierungsprodukte ganz oder teilweise mit Maleinsäureanhydrid verestert und danach die erhaltenen Maleinsäurehalbester in wässriger Phase mit Salzen der schwefligen Säure zu den Sulfobernsteinsäurehalbestern der Formel III umsetzt;
oder eines anionischen Tensids der Formel IV

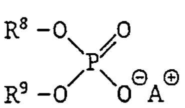 (IV)

worin $R^8$ einen Rest der Formel

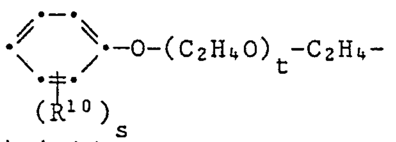

bedeutet,
$R^9$ die gleiche Bedeutung wie $R^8$ hat oder für Wasserstoff steht und $A^{\oplus}$ ein Proton oder ein Alkalimetall- oder Triäthanolammoniumkation bedeutet, wobei s für eine Zahl von 1 bis 4, t für eine Zahl von 2 bis 40 und $R^{10}$ für Wasserstoff, Styryl oder $C_3$-$C_{10}$-Alkyl stehen;
oder eines anionischen Tensids der Formel V

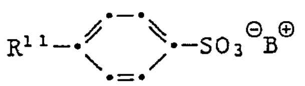

(V)

worin
$R^{11}$ für $C_8$-$C_{35}$-Alkyl und
$B^{\oplus}$ für ein Alkalimetallkation oder ein Ammoniumkation der Formel

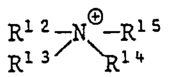

worin $R^{12}$, $R^{13}$, $R^{14}$ und $R^{15}$ unabhängig voneinander Wasserstoff, $C_1$-$C_4$-Alkyl, oder $C_1$-$C_4$-Hydroxyalkyl bedeuten, stehen;
0,1 bis 10 Gewichts-% eines kationischen Tensids der Formel VI

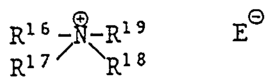

(VI)

worin
$R^{16}$ und $R^{17}$ unabhängig voneinander $C_1$-$C_4$-Alkyl,
$R^{18}$ $C_1$-$C_{35}$-Alkyl, Phenyl, Benzyl oder ein- oder mehrfach ungesättigtes $C_3$-$C_{35}$-Alkenyl;
$R^{19}$ $C_8$-$C_{35}$-Alkyl, Phenyl, Benzyl oder ein- oder mehrfach ungesättigtes $C_3$-$C_{35}$-Alkenyl, und
$E^{\ominus}$ ein Halogenanion, ein Nitratanion oder ein Aequivalent eines Sulfat-oder Phosphatanions bedeuten; und ad 100 Gewichts-% Wasser enthalten.

In den Definitionen der Reste $R^2$ bis $R^5$ und $R^{12}$ bis $R^{17}$ steht Alkyl für Methyl, Aethyl, n-Propyl, i-Propyl, die vier isomeren Butylreste sowie die isomeren Pentylreste. Cycloalkylreste sind Cyclopropyl und Cyclobutyl. Durch Cyan oder Methoxy substituiertes Alkyl steht insbesondere für 1-Cyan-1-methyläthyl oder 3-Methoxypropyl. Hydroxyalkyl steht vorzugsweise für 2-Hydroxyäthyl. Alkylgruppen mit bis zu 35 Kohlenstoffatomen, wie sie hauptsächlich in den Definitionen der Tenside der Formeln III, IV, V und VI, beziehungsweise der Reste $R^7$, $R^{10}$, $R^{11}$, $R^{18}$ und $R^{19}$ verwendet werden, beziehen sich auf verzweigte und geradkettige Alkylsubstituenten.

Beispiele sind n-Dodecyl, n-Tridecyl, n-Tetradecyl, n-Pentadecyl, n-Hexadecyl, n-Heptadecyl und n-Octadecyl, aber auch deren Isomeren mit verzweigten Ketten wie Trimethylnonyl, Tetramethylnonyl, Dimethylundecyl und Dipropylhexyl.

Die Anzahl der Kohlenstoffatome sind dabei Durchschnittswerte. Die Zahlen, welche durch m, n, r, s und t verkörpert sind, geben ebenfalls Durschnittswerte des Alkylierungs-, Alkylenoxylierungs- oder Polymerisierungsgrades an.

Beispiele für substituierte Phenylgruppen wie in den Definitionen von $R^8$ oder Formel V sind 4-Nonylphenyl; 2,4,6-Tributylphenyl; 2,4,6-Tristyrylphenyl; 2,4-Dinonylphenyl; 2,4,6-Tripentylphenyl; 2,4-Distyrylphenyl; 4-Styrylphenyl; 2,3,4,6-Tetrabutylphenyl; 4-Decylphenyl; Dodecylphenyl; 4-Heptylphenyl; 4-Pentylphenyl; 2,4-Dihexylphenyl; 2,4-Dioctylphenyl; 4-Octylphenyl; 4-Hexylphenyl; 2,4-Dipentylphenyl und 2,4,6-Tripentylphenyl.

Beispiele für Wirkstoffe der Formel II, die in den erfindungsgemässen Zusammensetzungen formuliert werden können, sind:
2-Aethylamino-4-isopropylamino-6-methylthio-1,3,5-triazin (Ametryn), 2-Aethylamino-4-tert.butylamino-6-methylthio-1,3,5-triazin (Terbutryne), 2-Aethylamino-4-tert.butylamino-6-methoxy-1,3,5-triazin (Terbumeton), 2,4-Aethylamino-6-methylthio-1,3,5-triazin (Simetryne), 2,4-bis-Isopropylamino-6-methoxy-1,3,5-triazin (Prometon), 2,4-bis-Isopropylamino-6-methylthio-1,3,5-triazin (Prometryne), 2-Isopropylamino-4-methylamino-6-methylthio-1,3,5-triazin (Desmetryne), 2-Isopropylamino-4-(3-methoxypropylamino)-6-methylthio-1,3,5-triazin (Methoprotryne), 2-Aethylthio-4,6-bis-isopropylamino-1,3,5-triazin (Dipropetryn), 2,4-bis-Diäthylamino-6-chlor-1,3,5-triazin (Chlorazine), 2-Aethylamino-4-sek.butylamino-6-methyoxy-1,3,5-triazin (Secbumeton), 2-Aethylamino-4-(1,2-dimethylpropylamino)-6-methylthio-1,3,5-triazin (Dimethametryn), 2,4-bis-Aethylamino-6-chlor-1,3,5-triazin (Simazin), 2-Aethylamino-4-isopropylamino-6-chlor-1,3,5-triazin (Atrazin), 2-Aethylamino-4-(1-cyan-1-methyläthylamino)-6-chlor-1,3,5-triazin (Cyanazin), 2-Cyclopropylamino-4-isopropylamino-6-chlor-1,3,5-triazin (Cyprazin), 2-Aethylamino-4-tert.butylamino-6-chlor-1,3,5-triazin (Terbutylazine), 2,4-bis-Isopropylamino-6-chlor-1,3,5-triazin (Propazin), 2-Isopropylamino-4-(3-methoxypropylamino-6-chloro-1,3,5-triazin (Mesoprazin), 2-tert.-Butylamino-4-methylamino-6-chlor-1,3,5-triazin, 2-Aethylamino-4-diäthylamino-6-chlor-1,3,5-triazin (Trietazine) und 2-Aethylamino-4-sek.butylamino-6-chlor-1,3,5-triazin (Sebuthylazine).

Unter den Triazin-Wirkstoffen sind Chlortriazine ($R^1$ steht für Chlor) bevorzugt. Vorzugsweise ist solch ein Wirkstoff aus der Reihe 2,4-bis-Aethylamino-6-chlor-1,3,5-triazin, 2-Aethylamino-4-isopropylamino-6-chlor-1,3,5-triazin, 2-Aethylamino-4-(1-cyan-1-methyläthylamino)-6-chlor- 1,3,5-triazin, 2-Cyclopropylamino-4-isopropylamino-6-chlor-1,3,5-triazin, 2-Aethylamino-4-tert.butylamino-6-chlor-1,3,5-triazin, 2,4-bis-Isopropylamino-6-chlor-1,3,5-triazin, 2-Isopropylamino-4-(3-methoxypropylamino)-6-chlor-1,3,5-triazin, 2,4-bis-Diäthylamino-6-chlor-1,3,5-triazin, 2-Aethylamino-4-diäthylamino-6-chlor-1,3,5-triazin, oder 2-Aethylamino-4-sek.butylamino-6-chlor-1,3,5-triazin ausgewählt. Weiter hervorzuheben haben sich diejenigen Chlortriazine, die nur sekundäre Aminogruppen als Substituenten enthalten, wie zum Beispiel 2,4-bis-Aethylamino-6-chlor-1,3,5-triazin, 2-Aethylamino-4-isopropylamino-6-chlor-1,3,5-triazin, 2-Aethylamino-4-(1-cyano-1-methyläthylamino)-6-chlor-1,3,5-triazin, 2-Aethylamino-4-tert.butylamino-6-chlor-1,3,5-triazin und 2-Cyclopropylamino-4-isopropylamino-6-chlor-1,3,5-triazin.

Wasserlösliche Salze von N-Phosphonomethylglycin sind beispielsweise die Alkalimetallsalze wie das Lithium-, Natrium- oder Kaliumsalz, Trialkylsulfoniumsalze wie das Trimethylsulfoniumsalz sowie die Ammoniumsalze.

Beispiele für zur Salzbildung geeignete Amine sind primäre, sekundäre und tertiäre aliphatische Amine wie Methylamin, Aethylamin, n-Propylamin, iso-Propylamin, n-Butylamin, iso-Butylamin, sek.-Butylamin, n-Pentylamin, iso-Pentylamin, Methylethylamin, Methylisopropylamin, Dimethylamin, Diäthylamin, Di-n-propylamin, Diisopropylamin, Trimethylamin, Triäthylamin, Tri-n-propylamin, Triisopropylamin, Aethanolamin, n-Propanolamin, Isopropanolamin und Diäthanolamin.

Bevorzugte wasserlösliche Salze des N-Phosphonomethylglycins sind die Monoalkylammoniumsalze oder Dialkylammoniumsalze, mit einer Kohlenstoffkettenlänge von 1 bis 14 Kohlenstoff-Atomen. Ganz besonders bevorzugt sind die Salze des N-Phosphonomethylglycins mit Aethyl-, Propyl-, Dimethyl- oder Diäthylamin, vor allem aber Isopropylamin.

Als Wirkstoff der Formel I wird vorzugsweise das Isopropylammoniumsalz des N-Phosphonomethylglycins eingesetzt. Entsprechende erfindungsgemässe Wirkstoffsuspensionen enthalten vorzugsweise einerseits das Isopropylammoniumsalz des N-Phosphonomethylglycins und andererseits ein Chlortriazin der Formel II worin $R^1$ für Chlor steht.

Da die erfindungsgemässen Wirkstoffkonzentrate häufig bei Temperaturen gelagert werden müssen, die das Wachstum von zersetzenden Mikroorganismen fördern, ist es zweckmässig den verkaufsfertigen Mitteln eine wirksame Menge eines Konservierungsmittels beizugeben. Im allgemeinen erfüllen diesen Zweck geringe Mengen an 37 %iger Formaldehyd-Lösung oder 1,2-Benzisothiazol-3-on. Uebliche Konzentrationen an Konservierungsmittel liegen zwischen 0 und 0,5 Gewichts-%, insbesondere zwischen 0,05 und 0,2 Gewichts-%. Da eine Schaumbildung auf den verdünnten Spritzbrühen unerwünscht ist - die Dosierungsgenauigkeit wird herabgesetzt, die Wirkstoffverteilung wird inhomogen -, setzt man den Konzentraten schaumhemmende Mittel zu. Als geeignet haben sich in besonderer Weise Silikonöle erwiesen. Die erfindungsgemässen Suspensionen enthalten in ihren bevorzugten Ausführungsformen bis zu 10 Gewichts-% schaumhemmender Silikonöle. Vorzugsweise liegt der Anteil der schaumhemmenden Substanzen zwischen 0,01 und 5 Gewichts-%, insbesondere zwischen 0,05 und 2 Gewichts-%. Zur Einstellung eines optimalen Viskositätsgrades ist es häufig notwendig, der herbiziden Suspension ein in wasserlösliches oder in Wasser quellfähiges Verdickungsmittel zuzusetzen. Solche geeigneten Verdickungsmittel sind: Polysaccharide vom Xantham-Typ, Alginat-Typ, Guar-Typ, Cellulose-Typ oder synthetische Markromoleküle wie Polyäthylenglykole, Polyvinylpyrrolidone, Polyvinylalkohole, Polyacrylate oder quellfähige, strukturbildende Silikate wie pyrogene oder gefällte Kieselsäuren, Bentonite, Montmorillonite, Hectorite, Attapulgite bzw. organische Derivate der genannten Strukturen von Aluminium-Silikaten. Bevorzugt sind Polysaccharide. Erfindungsgemässe Suspension enthalten bis zu 10 Gewichtsprozent Verdickungsmittel. Vorzugsweise liegt der Anteil zwischen 0,01 und 5 Gewichts-%, insbesondere aber zwischen 0,05 und 0,2 Gewichts-%. Um die Fliessfähigkeit der herbiziden Zusammensetzung auch bei tiefen Temperaturen zu erhalten und das Ausfrieren der wässrigen homogenen Phase zu verhindern, werden den erfindungsgemässen Mitteln meist Frostschutzmittel zugesetzt. Hierzu eignen sich übliche Zusätze wie Aethylenglykol, Propylenglykol, Glycerin, Di-, Tri- und Tetraäthylenglykol und Harnstoff. Den erfindungsgemässen Mitteln können bis zu 25 Gewichts-% Antifrostmittel zugesetzt werden. Vorzugsweise enthalten verkaufsfähige Mittel jedoch nicht mehr als 10 Gewichts-% Frostschutzmittel. Vorzugsweise werden als Frostschutzmittel Aethylenglykol oder Propylenglykol zugesetzt. Die in der Praxis eingesetzte Menge Frostschutzmittel hängt von den geographischen, klimatischen und saisonalen Gegebenheiten des vorgesehenen Herbizideinsatzes ab.

Die erfindungsgemässen Wirkstoffsuspensionen eignen sich zum selektiven Bekämpfen von Unkräutern in mehrjährigen Kulturen. Solche Kulturen bestehen mehrheitlich aus Bäumen. Insbesondere werden in diesen Kulturen solche Unkräuter bekämpft, die bei Nahrungs-, Wasser- und Lichtaufnahme in Konkurrenz zu den Kulturpflanzen treten können. So können einerseits nur die Unkräuter in unmittelbarer Nachbarschaft der Pflanzen, zum Beispiel auf den Baumscheiben, andererseits aber auch die Unkräuter in den gesamten

Baumplantagen zurückgedrängt werden. Beispiele für Zielkulturen der erfindungsgemässen Mittel sind tropische und subtropische Kulturen wie Kaffee, Kautschuk, Kakao, Dattelpalmen, Oelpalmen, Kokospalmen, Bananen oder Citrus, aber auch Kulturen aus gemässigten Klimazonen wie Obst, (Aepfel, Birnen, Pfirsiche, Aprikosen, Kirschen, Pflaumen) Wein, Nüsse, Avocados und Oliven. Ferner kommen Pflanzungen von Nutzhölzern wie Kiefer, Tanne, Fichte oder Pappel in Betracht.

In bevorzugte erfindungsgemässe Wirkstoffsuspensionen werden neben den Wirkstoffkomponenten der Formeln I und II und der Tensidkombination des anionischen Tensids der Formeln III, IV oder V und des kationischen Tensids der Formel VI zusätzlich 0,01 bis 5 % eines wasserlöslichen oder in Wasser quellfähigen Verdickungsmittels, 0,01 bis 5 % eines schaumhemmenden Mittels und 0 bis 25 % eines Antifrostmittels eingearbeitet.

Unter den anionischen alternativen Tensiden der Formeln III, IV und V haben sich die Tenside der Formel III als besonders geeignet erwiesen.

Die erfindungsgemässen Zusammensetzungen zeichnen sind durch hervorragende Toleranz gegen biologisch oder technisch bedingte Aenderungen im Wirkstoffanteil der Mittel aus. In einem breiten Bereich braucht die Tensidkomponente bei Erhöhung oder Erniedrigung des Anteils eines Herbizidwirkstoffs nicht oder nur mengenmässig in geringem Umfang variiert werden. Auch bei langem Lagern der verkaufsfertigen Suspensionskonzentrate wird keine Zersetzung oder Koagulation der Suspension beobachtet. Geringfügiges Absetzen der festen dispersen Phase wird nur bei sehr langem Lagern beobachtet. Dieser Absetzungsvorgang ist normal und kann durch einfaches Schütteln oder Rühren rückgängig gemacht werden. Die Suspension ist also stabil.

Einen Vorteil für den Hersteller bedeutet es, dass bei der Kombination eines flüssigen wasserlöslichen und eines festen Wirkstoffs die feste Komponente direkt in einer Lösung der flüssigen Komponente suspendiert werden kann.

Bevorzugte erfindungsgemässe Zusammensetzungen enthalten folgende Bestandteile:
10 bis 25 Gewichts-% Isopropylammoniumsalz des N-Phosphonomethylglycins,
25 bis 45 Gewichts-% eines Triazins der Formel II,
0,3 bis 5 Gewichts-% eines anionischen Tensids der Formeln III, IV oder V,
0,3 bis 5 Gewichts-% eines kationischen Tensids der Formel VI und
ad 100 Gewichts-% Wasser.

Weiter bevorzugte Wirkstoffsuspensionen enthalten
13 bis 25 Gewichts-% Isopropylammoniumsalz des N-Phosphonomethylglycins,
20 bis 35 Gewichts-% eines Triazins der Formel II,
0,3 bis 3 Gewichts-% eines anionischen Tensids der Formeln III, IV oder V,
0,3 bis 3 Gewichts-% eines kationischen Tensids der Formel VI und
ad 100 Gewichts-% Wasser.

Von den obigen Formulierungen haben jeweils diejenigen besonders vorteilhafte Eigenschaften, welche als anionisches Tensid eine Verbindung der Formel III enthalten. Insbesondere bei der Formulierung eines Chlortriazins der Formel II ist der Einsatz eines Tensids der Formel III von Vorteil. Ganz besonders erweist sich die gute Eignung dieser Tensidgruppe bei der Formulierung des Chlortriazins 2-Aethylamino-4-tert.butylamino-6-chlor-1,3,5-triazin (Terbutylazine). Die bevorzugten verkaufsfähigen Mittel enthalten zusätzlich 0,05 bis 0,2 Gewichts-% eines wasserlöslichen oder in Wasser quellfähigen Verdickungsmittels, 0,05 bis 2 Gewichts-% eines schaumhemmenden Mittels, 0,05 bis 0,2 Gewichts-% eines Konservierungsmittels und 0 bis 10 Gewichts-% eines Antifrostmittels.

Dabei werden als Verdickungsmittel Polysaccharid, als schaumhemmendes Mittel Silikonöl, als Konservierungsmittel Formaldehyd oder 1,2-Benzisothiazol-3-on und als Antifrostmittel Aethylenglykol oder Propylenglykol eingesetzt.

Unter den anionischen Tensiden der Formel III werden vorzugsweise solche Verbindungen zur Herstellung der erfindungsgemässen Suspensionen verwendet, worin X und Y jeweils für Aethylenbrücken, Z für $R^6$, $M^{\oplus}$ für ein Natriumkation, m und n unabhängig voneinander für Zahlen von 4 bis 11 und r für eine Zahl von 1 bis 3 stehen, und insbesondere, worin m und n die Zahl 6 und r die Zahl 2 bedeuten.

Unter den anionischen Tensiden der Formel IV werden vorzugsweise entweder solche Verbindungen zur Formulierung der herbiziden Wirkstoffe eingesetzt, worin $R^{10}$ für Wasserstoff oder Styryl, $A^{\oplus}$ für ein Triäthanolammoniumkation, s für eine Zahl von 1 bis 3 und t für eine Zahl von 10 bis 30 stehen, insbesondere ein Gemisch von Mono- und Di-(tristyrylphenol-octadecaglykoläther)-phosphorsäureester-triäthanol-ammoniumsalzen; oder solche, worin $R^{10}$ für $C_3$-$C_{15}$-Alkyl, $A^{\oplus}$ für ein Alkalimetallkation, s für die Zahl eins und t für eine Zahl von 5 bis 13 stehen, insbesondere ein Gemisch von Mono- und Di-(nonylphenol-nonaglykoläther)-phosphorsäureester-Kaliumsalzen.

Unter den anionischen Tensiden der Formel V werden vorzugsweise solche Verbindungen zur Herstellung der erfindungsgemässen Wirkstoffsuspensionen verwendet, worin $B^{\oplus}$ für das Triäthanolammoniumkation und $R^{11}$ für $C_9$-$C_{15}$-Alkyl stehen.

Das kationische Tensid der Formel VI wird in der bevorzugten Ausführungsform der vorliegenden Erfindung durch Verbindungen verkörpert, worin $E^{\ominus}$ für ein Halogenanion, $R^{16}$, $R^{17}$ und $R^{18}$ für Methyl und $R^{19}$ für $C_9$-$C_{15}$-Alkyl stehen. Insbesondere steht das kationische Tensid der Formel VI bevorzugt für Dodecyltrimethylammoniumchlorid.

Ganz besonders bevorzugte Ausführungsformen der erfindungsgemässen Mittel enthalten 13 bis 25

Gewichts-% Isopropylammoniumsalz des N-Phosphonomethylglycins, 20 bis 35 Gewichts-% 2-Aethylamino-4-tert.butylamino-6-chlor-1,3,5-triazin, 0,3 bis 3 Gewichts-% eines anionischen Tensids, der Formel III, worin X und Y für Aethylenbrücken, Z für $R^6$, $M^{\oplus}$ für ein Natriumkation, m und n für die Zahl 6 und r für die Zahl 2 stehen, oder eines Mono- und Di-(tristyrylphenol-octadecaglykoläther)-phosphorsäureester-triäthanolammoniumsalz-Gemisches, oder eines Mono-und Di-(nonylphenol-nonaglykoläther)-phosphorsäureester-Kaliumsalz-Gemisches, oder Dodecylbenzolsulfonsäure-triäthanolammoniumsalz, 0,3 bis 3 Gewichts-% Dodecyltrimethylammoniumchlorid, 0,05 bis 0,2 Gewichts-% Polysaccharid, 0,05 bis 2,0 Gewichts-% Silikonöl, 0,05 bis 0,2 Gewichts-% 1,2-Benzisothiazol-3-on oder einer 37 %igen Formaldehydlösung, 0 bis 10 Gewichts-% Aethylenglykol oder Propylenglykol, und ad 100 Gewichts-% Wasser.

Spezifische bevorzugte fliessfähige, herbizide Wirkstoffsuspensionen enthalten die folgenden Bestandteile:

1) 21 Gewichts-% Isopropylammoniumsalz des N-Phosphonomethylglycins,
30 Gewichts-% 2-Aethylamino-4-tert.butylamino-6-chlor-1,3,5-triazin,
1,5 Gewichts-% anionisches Tensid der Formel III, worin X und Y für Aethylenbrücken, Z für $R^6$, $M^{\oplus}$ für ein Natriumkation, m und n für die Zahl 6 und r für die Zahl 2 stehen,
0,5 Gewichts-% Dodecyltrimethylammoniumchlorid,
1,5 Gewichts-% Silikonöl,
0,13 Gewichts-% Polysaccharid,
0,13 Gewichts-% 37 %ige Formaldehydlösung und
ad 100 Gewichts-% Wasser.

2) 14,5 Gewichts-% Isopropylammoniumsalz des N-Phosphonomethylglycins, 30 Gewichts-% 2-Aethylamino-4-tert.butylamino-6-chlor-1,3,5-triazin, 1,6 Gewichts-% anionisches Tensid der Formel III, worin X und Y für Aethylenbrücken, Z für $R^6$, $M^{\oplus}$ für ein Natriumkation, m und n für die Zahl 6 und r für die Zahl 2 stehen,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser.

3) 18 Gewichts-% Isopropylammoniumsalz des N-Phosphonomethylglycins,
31 Gewichts-% 2-Aethylamino-4-tert.butylamino-6-chlor-1,3,5-triazin,
1,6 Gewichts-% anionisches Tensid der Formel III, worin X und Y für Aethylenbrücken, Z für $R^6$, $M^{\oplus}$ für ein Natriumkation, m und n für die Zahl 6 und r für die Zahl 2 stehen,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser.

4) 21 Gewichts-% Isopropylammoniumsalz des N-Phosphonomethylglycins,
30 Gewichts-% 2-Aethylamino-4-tert.butylamino-6-chlor-1,3,5-triazin,
2 Gewichts-% Mono- und Di-(tristyrylphenol-octadecaglykoläther)-phosphorsäureester-triäthanolammoniumsalz-Gemisch,
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser.

5) 21 Gewichts-% Isopropylammoniumsalz des N-Phosphonomethylglycins,
30 Gewichts-% 2-Aethylamino-4-tert.butylamino-6-chloro-1,3,5-triazin,
2 Gewichts-% Mono- und Di-(nonylphenol-nonaglykoläther)-phosphorsäureester-Kaliumsalz-Gemische,
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser.

6) 21 Gewichts-% Isopropylammoniumsalz des N-Phosphonomethylglycins,
30 Gewichts-% 2-Aethylamino-4-tert.butylamino-6-chlor-1,3,5-triazin,
0,75 Gewichts-% Dodecylbenzolsulfonsäure-triäthanolammoniumsalz,
0,9 Gewichts-% Dodecyltrimethylammoniumchlorid,
0,1 Gewichts-% Silikonöl,
0,15 Gewichts-% Polysaccharid,
0,1 Gewichts-% 1,2-Benzisothiazol-3-on und
ad 100 Gewichts-% Wasser.

7) 21 Gewichts-% Isopropylammoniumsalz des N-Phosphonomethylglycins,
26 Gewichts-% 2-Aethylamino-4-tert.butylamino-6-chlor-1,3,5-triazin,
1,5-Gewichts-% anionisches Tensid der Formel III, worin X und Y für Aethylenbrücken, Z für $R^6$, $M^{\oplus}$ für ein Natriumkation, m und n für die Zahl 6 und r für die Zahl 2 stehen,

0,5 Gewichts-% Dodecyltrimethylammoniumchlorid,
1,4 Gewichts-% Silikonöl,
0,15 Gewichts-% Polysaccharid,
0,15 Gewichts-% 37 %ige Formaldehydlösung und
ad 100 Gewichts-% Wasser.

8) 15,6 Gewichts-% N-Phosphonomethylglycin,
30 Gewichts-% 2-Aethylamino-4-tert.butylamino-6-chlor-1,3,5-triazin,
1,5-Gewichts-% anionisches Tensid der Formel III, worin X und Y für Aethylenbrücken, Z für $R^6$, $M^\oplus$ für ein Natriumkation, m und n für die Zahl 6 und r für die Zahl 2 stehen,
0,5 Gewichts-% Dodecyltrimethylammoniumchlorid,
1,5 Gewichts-% Silikonöl,
0,13 Gewichts-% Polysaccharid,
0,13 Gewichts-% 37 %ige Formaldehydlösung und
ad 100 Gewichts-% Wasser.

9) 10,7 Gewichts-% N-Phosphonomethylglycin,
30 Gewichts-% 2-Aethylamino-4-tert.butylamino-6-chlor-1,3,5-triazin,
1,6 Gewichts-% anionisches Tensid der Formel III, worin X und Y für Aethylenbrücken, Z für $R^6$, $M^\oplus$ für ein Natriumkation, m und n für die Zahl 6 und r für die Zahl 2 stehen,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser.

10) 13,3 Gewichts-% N-Phosphonomethylglycin,
31 Gewichts-% 2-Aethylamino-4-tert.butylamino-6-chlor-1,3,5-triazin,
1,6 Gewichts-% anionisches Tensid der Formel III, worin X und Y für Aethylenbrücken, Z für $R^6$, $M^\oplus$ für ein Natriumkation, m und n für die Zahl 6 und r für die Zahl 2 stehen,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser.

11) 15,6 Gewichts-% N-Phosphonomethylglycin,
30 Gewichts-% 2-Aethylamino-4-tert.butylamino-6-chlor-1,3,5-triazin,
2 Gewichts-% Mono- und Di-(tristyrylphenol-octadecaglykoläther)-phosphorsäureester-triäthanolammoniumsalz-Gemisch
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser.

12) 15,6 Gewichts-% N-Phosphonomethylglycin,
30 Gewichts-% 2-Aethylamino-4-tert.butylamino-6-chlor-1,3,5-triazin,
2 Gewichts-% Mono- und Di-(nonylphenol-nonaglykoläther)-phosphorsäureester-Kaliumsalz-Gemisch
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser.

13) 15,6 Gewichts-% N-Phosphonomethylglycin,
30 Gewichts-% 2-Aethylamino-4-tert.butylamino-6-chlor-1,3,5-triazin,
0,75 Gewichts-% Dodecylbenzolsulfonsäure-triäthanolammoniumsalz,
0,9 Gewichts-% Dodecyltrimethylammoniumchlorid,
0,1 Gewichts-% Silikonöl,
0,15 Gewichts-% Polysaccharid,
0,1 Gewichts-% 1,2-Benzisothiazol-3-on und
ad 100 Gewichts-% Wasser.

14) 15,6 Gewichts-% N-Phosphonomethylglycin,
26 Gewichts-% 2-Aethylamino-4-tert.butylamino-6-chlor-1,3,5-triazin,
1,5 Gewichts-% anionisches Tensid der Formel III, worin X und Y für Aethylenbrücken, Z für $R^6$, $M^\oplus$ für ein Natriumkation, m und n für die Zahl 6 und r für die Zahl 2 stehen,
0,5 Gewichts-% Dodecyltrimethylammoniumchlorid,
1,4 Gewichts-% Silikonöl,
0,15 Gewichts-% Polysaccharid,
0,15 Gewichts-% 37 %ige Formaldehydlösung und

ad 100 Gewichts-% Wasser.

Die erfindungsgemässen Wirkstoffsuspensionen haben eine Dichte von 1,12 bis 1.16 g/ml und einen pH-Wert zwischen 4,0 und 6,0. Die Viskosität wird mit einer geeigneten Menge an Verdicker zwischen 400 und 900 mPas eingestellt.

Zur Herstellung der erfindungsgemässen Suspensionskonzentrate verrührt man beispielsweise das gesamte Wirkstoffgemisch in einer wässrigen Lösung oder einer Suspension der Formulierungshilfsmittel, zerkleinert die erhaltene grobteilige Suspension gegebenenfalls durch Vormahlen in einer geeigneten Mühle auf Feinheiten von höchstens 200 µm und mahlt das Produkt anschliessend in Reibkugelmühlen, Zahnmühlen, Kolloidmühlen, Dyno-Mühlen oder Sandmühlen, bis die Partikel der Suspension in Teilchengrössen von 0,1 bis 12 µm, vorzugsweise unter 5 µm vorliegen. Insbesondere haben dabei mindestens 50 % der Teilchen einen Durchmesser von weniger als 2,5 µm. Der gewünschte Viskositätsgrad (vorzugsweise 400 - 900 mPas) wird durch Zusatz einer geeigneten Menge an Verdickungsmittel eingestellt.

Die Applikation der erfindungsgemässen Mittel erfolgt auf einfache Weise dadurch, dass man die Suspensionskonzentrate mit der gewünschten Menge Wasser verdünnt, kurz verrührt und auf die Pflanzen appliziert. Die aus den erfindungsgemässen Suspensionskonzentraten erhaltenen Spritzbrühen zeichnen sich insbesondere durch die gleichmässige Verteilung des Wirkstoffes aus.

Die Erfindung wird durch das nachstehende Beispiel erläutert, jedoch nicht begrenzt.

Beispiel 1: Herstellung von 100 l Wirkstoffsuspension (114 kg)

In einem Rührgefäss werden 26,7 kg Wasser; 1,7 kg anionisches Tensid der Formel III, worin X und Y für Aethylenbrücken, Z für $R^6$, $M^{\oplus}$ für ein Natriumkation, m und n für die Zahl 6 und r für die Zahl 2 stehen; 1,7 kg 35 %ige Dodecyltrimethylammoniumchloridlösung, 1,7 kg Silikonöl und 39,2 kg einer 62 %igen Lösung des Isopropylammoniumsalzes von N-Phosphonomethylglycin miteinander bis zur Homogenität verrührt. Diesem Gemisch fügt man 35,5 kg 97 %iges 2-Aethylamino-4-tert.butylamino-6-chlor-1,3,5-triazin zu und vermahlt das Gemisch zuerst in einer Zahnkolloidmühle und anschliessend in einer Kugelmühle bis auf eine Partikelgrösse von unter 12 µm, wobei 50 % der Feststoffteilchen kleiner als 2,2 µm sind. Dieser vermahlenen Suspension fügt man ein mindestens 4 Stunden vorgequollenes Gel aus 0,15 kg Polysaccharid (Xantham-gum), 7,2 kg Wasser und 0,15 kg 37 %iger Formaldehydlösung zu. Man erhält so 100 l Wirkstoffsuspension mit einer Viskosität von 500 - 800 mPas, einer Dichte von 1,14 ± 0,015 g/ml und einem pH-Wert zwischen 4,0 und 6,0, enthaltend 21 Gewichts-% Isopropylammoniumsalz des N-Phosphonomethylglycins, 30 Gewichts-% 2-Aethylamino-4-tert.butylamino-6-chlor-1,3,5-triazin, 1,5-Gewichts-% anionisches Tensid der Formel III, worin X und Y für Aethylenbrücken, Z für $R^6$, $M^{\oplus}$ für ein Natriumkation, m und n für die Zahl 6 und r für die Zahl 2 stehen, 0,5 Gewichts-% Dodecyltrimethylammoniumchlorid, 1,5 Gewichts-% Silikonöl, 0,13 Gewichts-% Polysaccharid, 0,13 Gewichts-% 37 %ige Formaldehydlösung und ad 100 Gewichts-% Wasser.

In analoger Weise erhält man die übrigen, oben spezifisch genannten Ausführungsformen 2) bis 14) der vorliegenden Erfindung.

**Patentansprüche**

1. Fliessfähige herbizide Wirkstoffsuspension enthaltend als aktive Komponenten einerseits N-Phosphonomethylglycin oder dessen wasserlösliches Salz und andererseits ein Triazinherbizid, dadurch gekennzeichnet, dass sie

5 bis 40 Gewichts-% N-Phosphonomethylglycin der Formel I

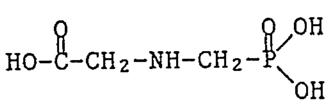

(I)

oder dessen wasserlösliches Salz;

8 bis 50 Gewichts.-% eines Triazinherbizids der Formel II

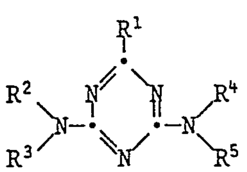

(II)

worin

$R^1$ Chlor, Methoxy, Methylthio oder Aethylthio,

$R^2$ und $R^4$ unabhängig voneinander Wasserstoff oder $C_1$-$C_4$-Alkyl,

$R^3$ $C_1$-$C_4$-Alkyl und

$R^5$ $C_1$-$C_5$-Alkyl, $C_3$-$C_4$-Cycloalkyl oder durch Cyan oder Methoxy substituiertes $C_1$-$C_4$-Alkyl bedeuten;

0,1 bis 10 Gewichts-% eines anionischen Tensids der Formel III

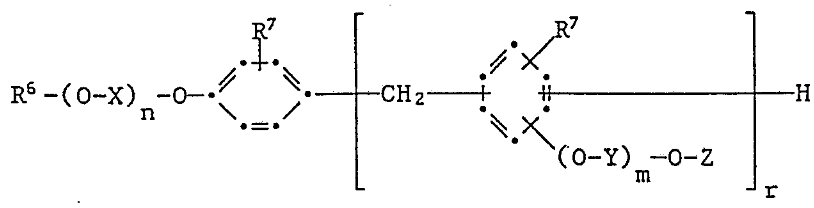

(III)

worin
$R^6$ einen Rest

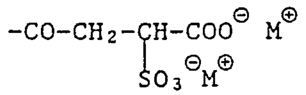

oder

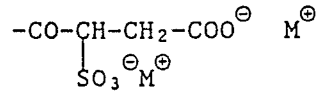

,

X und Y unabhängig voneinander eine Aethylen- oder Propylenbrücke,
$R^7$ einen geradkettigen oder verzweigten $C_6$-$C_{14}$-Alkylrest,
Z Wasserstoff oder einen unter $R^6$ definierten Rest,
m und n unabhängig voneinander Zahlen von 2 bis 25,
r eine Zahl von 1 bis 9, und
$M^\oplus$ ein Proton, ein Alkalimetallkation oder ein Aequivalent eines Erdalkalimetallkations bedeuten; welches man erhält, indem man in an sich bekannter Weise Monoalkylphenole der Formel

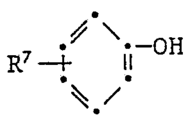

mit Formaldehyd im Molverhältnis 2:1 bis 10:9 in Gegenwart von sauren Katalysatoren zu mehrkernigen Novolakharzen kondensiert, diese in Gegenwart von alkalischen Katalysatoren mit 2 bis 25 Mol Alkylenoxid je Mol eingesetzten Monoalkylphenols umsetzt, die freien Hydroxylgruppen der erhaltenen Oxalkylierungsprodukte ganz oder teilweise mit Maleinsäureanhydrid verestert und danach die erhaltenen Maleinsäurehalbester in wässriger Phase mit Salzen der schwefligen Säure zu den Sulfobernsteinsäurehalbestern der Formel III umsetzt;
oder eines anionischen Tensids der Formel IV

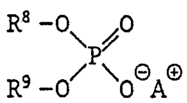

(IV)

worin $R^8$ einen Rest der Formel

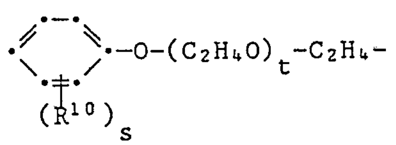

bedeutet,
$R^9$ die gleiche Bedeutung wie $R^8$ hat oder für Wasserstoff steht und $A^\oplus$ ein Proton oder ein Alkalimetall- oder Triäthanolammoniumkation bedeutet, wobei s für eine Zahl von 1 bis 4, t für eine Zahl von 2 bis 40 und $R^{10}$ für Wasserstoff, Styryl oder $C_3$-$C_{10}$-Alkyl stehen;
oder eines anionischen Tensids der Formel V

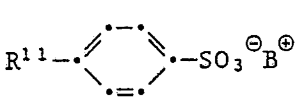

(V)

worin
$R^{11}$ für $C_8$-$C_{35}$-Alkyl und
$B^\oplus$ für ein Alkalimetallkation oder ein Ammoniumkation der Formel

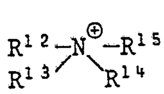

worin $R^{12}$, $R^{13}$, $R^{14}$ und $R^{15}$ unabhängig voneinander Wasserstoff, $C_1$-$C_4$-Alkyl, oder $C_1$-$C_4$-Hydroxyalkyl bedeuten, stehen;
0,1 bis 10 Gewichts-% eines kationischen Tensids der Formel VI

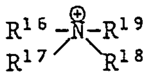 $E^{\ominus}$ (VI)

worin
$R^{16}$ und $R^{17}$ unabhängig voneinander $C_1$-$C_4$-Alkyl,
$R^{18}$ $C_1$-$C_{35}$-Alkyl, Phenyl, Benzyl oder ein- oder mehrfach ungesättigtes $C_3$-$C_{35}$-Alkenyl;
$R^{19}$ $C_8$-$C_{35}$-Alkyl, Phenyl, Benzyl oder ein- oder mehrfach ungesättigtes $C_3$-$C_{35}$-Alkenyl, und
$E^{\ominus}$ ein Halogenanion, ein Nitratanion oder ein Aequivalent eines Sulfat-oder Phosphatanions bedeuten; und
ad 100 Gewichts-% Wasser enthält.

2. Wirkstoffsuspension gemäss Anspruch 1, dadurch gekennzeichnet, dass sie
5 bis 40 Gewichts-% N-Phosphonomethylglycin der Formel I

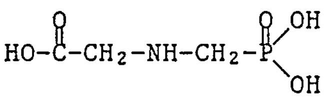 (I)

oder dessen Isopropylammoniumsalz;
8 bis 50 Gewichts.-% eines Triazinherbizids der Formel II

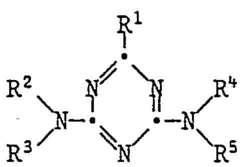 (II)

worin
$R^1$ Chlor, Methoxy, Methylthio oder Aethylthio,
$R^2$ und $R^4$ unabhängig voneinander Wasserstoff oder $C_1$-$C_4$-Alkyl,
$R^3$ $C_1$-$C_4$-Alkyl und
$R^5$ $C_1$-$C_5$-Alkyl, $C_3$-$C_4$-Cycloalkyl oder durch Cyan oder Methoxy substituiertes $C_1$-$C_4$-Alkyl bedeuten;
0,1 bis 10 Gewichts-% eines anionischen Tensids der Formel III

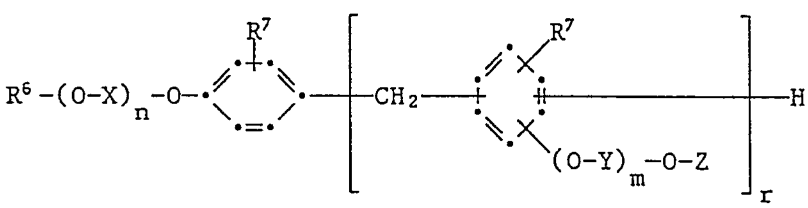 (III)

worin
$R^6$ einen Rest

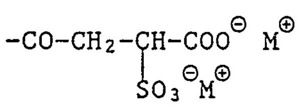 oder 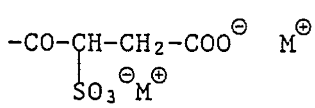 ,

X und Y unabhängig voneinander eine Aethylen- oder Propylenbrücke,
$R^7$ einen geradkettigen oder verzweigten $C_6$-$C_{14}$-Alkylrest,
Z Wasserstoff oder einen unter $R^6$ definierten Rest,
m und n unabhängig Zahlen von 2 bis 25,
r eine Zahl von 1 bis 9, und
$M^{\oplus}$ ein Proton, ein Alkalimetallkation oder ein Aequivalent eines Erdalkalimetallkations bedeuten; welches man erhält, indem man in an sich bekannter Weise Monoalkylphenole der Formel

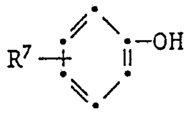

mit Formaldehyd im Molverhältnis 2:1 bis 10:9 in Gegenwart von sauren Katalysatoren zu mehrkernigen Novolakharzen kondensiert, diese in Gegenwart von alkalischen Katalysatoren mit 2 bis 25 Mol Alkylenoxid je Mol eingesetzten Monoalkylphenols umsetzt, die freien Hydroxylgruppen der erhaltenen Oxalkylierungsprodukte ganz oder teilweise mit Maleinsäureanhydrid verestert und danach die erhaltenen Maleinsäurehalbester in wässriger Phase mit Salzen der schwefligen Säure zu den Sulfobernsteinsäurehalbestern der Formel III umsetzt;
oder eines anionischen Tensids der Formel IV

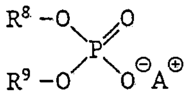

(IV)

worin $R^8$ einen Rest der Formel

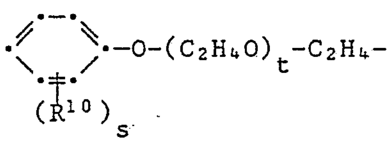

bedeutet,
$R^9$ die gleiche Bedeutung wie $R^8$ hat oder für Wasserstoff steht und $A^{\oplus}$ ein Proton oder ein Alkalimetall- oder Triäthanolammoniumkation bedeutet, wobei s für eine Zahl von 1 bis 4, t für eine Zahl von 2 bis 40 und $R^{10}$ für Wasserstoff, Styryl oder $C_3$-$C_{10}$-Alkyl stehen;
oder eines anionischen Tensids der Formel V

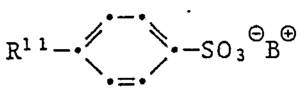

(V)

worin
$R^{11}$ für $C_8$-$C_{35}$-Alkyl und
$B^{\oplus}$ für ein Alkalimetallkation oder ein Ammoniumkation der Formel

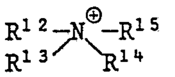

worin $R^{12}$, $R^{13}$, $R^{14}$ und $R^{15}$ unabhängig voneinander Wasserstoff, $C_1$-$C_4$-Alkyl, oder $C_1$-$C_4$-Hydroxyalkyl bedeuten, stehen;
0,1 bis 10 Gewichts-% eines kationischen Tensids der Formel VI

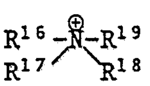 $E^{\ominus}$ (VI)

worin
$R^{16}$ und $R^{17}$ unabhängig voneinander $C_1$-$C_4$-Alkyl,
$R^{18}$ $C_1$-$C_{35}$-Alkyl, Phenyl, Benzyl oder ein- oder mehrfach ungesättigtes $C_3$-$C_{35}$-Alkenyl;
$R^{19}$ $C_8$-$C_{35}$-Alkyl, Phenyl, Benzyl oder ein- oder mehrfach ungesättigtes $C_3$-$C_{35}$-Alkenyl, und
$E^{\ominus}$ ein Halogenanion, ein Nitratanion oder ein Aequivalent eines Sulfat-oder Phosphatanions bedeuten; und
ad 100 Gewichts-% Wasser enthält.

3. Wirkstoffsuspension gemäss Anspruch 1, dadurch gekennzeichnet, dass sie als eine herbizide Wirkstoffkomponente ein wasserlösliches Alkylammoniumsalz oder Alkanolammoniumsalz des N-Phosphonomethylglycins enthält.

4. Wirkstoffsuspension gemäss Anspruch 1, dadurch gekennzeichnet, dass sie zusätzlich 0,01 bis 5 Gewichts-% eines wasserlöslichen oder in Wasser quellfähigen Verdickungsmittels enthält.

5. Wirkstoffsuspension gemäss Anspruch 1, dadurch gekennzeichnet, dass sie zusätzlich
0,01 bis 5 Gewichts-% eines wasserlöslichen oder in Wasser quellfähigen Verdickungsmittels,
0,01 bis 5 Gewichts-% eines schaumhemmenden Mittels und

0 bis 25 Gewichts-% eines Antifrostmittels enthält.

6. Wirkstoffsuspension gemäss Anspruch 1, dadurch gekennzeichnet, dass sie als eine herbizide Wirkstoffkomponente das Isopropylammoniumsalz des N-Phosphonomethylglycins enthält.

7. Wirkstoffsuspension gemäss Anspruch 1, dadurch gekennzeichnet, dass sie als Wirkstoffe einerseits das Isopropylammoniumsalz des N-Phosphonomethylglycins und andererseits ein Chlortriazin der Formel II enthält, worin $R^1$ für Chlor steht.

8. Wirkstoffsuspension gemäss Anspruch 7, dadurch gekennzeichnet, dass das Chlortriazin aus der Reihe
2,4-bis-Aethylamino-6-chlor-1,3,5-triazin,
2-Aethylamino-4-isopropylamino-6-chlor-1,3,5-triazin,
2-Aethylamino-4-(1-cyan-1-methyläthylamino)-6-chloro-1,3,5-triazin,
2-Cyclopropylamino-4-isopropylamino-6-chlor-1,3,5-triazin,
2-Aethylamino-4-tert.butylamino-6-chlor-1,3,5-triazin,
2,4-bis-Isopropylamino-6-chlor-1,3,5-triazin,
2-Isopropylamino-4-(3-methoxypropylamino)-6-chlor-1,3,5-triazin,
2,4-bis-Diäthylamino-6-chlor-1,3,5-triazin,
2-Aethylamino-4-diäthylamino-6-chlor-1,3,5-triazin, oder
2-Aethylamino-4-sek.butylamino-6-chlor-1,3,5-triazin ausgewählt ist.

9. Wirkstoffsuspension gemäss Anspruch 1, dadurch gekennzeichnet, dass sie als anionisches Tensid eine Verbindung der Formel III enthält.

10. Wirkstoffsuspension gemäss Anspruch 6, dadurch gekennzeichnet, dass sie
10 bis 25 Gewichts-% Isopropylammoniumsalz des N-Phosphonomethylglycins,
25 bis 45 Gewichts-% eines Triazins der Formel II,
0,3 bis 5 Gewichts-% eines anionischen Tensids der Formeln III, IV oder V und
0,3 bis 5 Gewichts-% eines kationischen Tensids der Formel VI enthält.

11. Wirkstoffsuspension gemäss Anspruch 10, dadurch gekennzeichnet, dass sie als anionisches Tensid eine Verbindung der Formel III enthält.

12. Wirkstoffsuspension gemäss Anspruch 6, dadurch gekennzeichnet, dass sie
13 bis 25 Gewichts-% Isopropylammoniumsalz des N-Phosphonomethylglycins,
20 bis 35 Gewichts-% eines Triazins der Formel II,
0,3 bis 3 Gewichts-% eines anionischen Tensids der Formeln III, IV oder V und
0,3 bis 3 Gewichts-% eines kationischen Tensids der Formel VI enthält.

13. Wirkstoffsuspension gemäss Anspruch 12, dadurch gekennzeichnet, dass sie als anionisches Tensid eine Verbindung der Formel III enthält.

14. Wirkstoffsuspension gemäss Anspruch 12, dadurch gekennzeichnet, dass sie ein anionisches Tensid der Formel III und als Triazin der Formel II die Verbindung 2-Aethylamino-4-tert.butylamino-6-chlor-1,3,5-triazin enthält.

15. Wirkstoffsuspension gemäss Anspruch 12, dadurch gekennzeichnet, dass sie zusätzlich
0,05 bis 0,2 Gewichts-% eines wasserlöslichen oder in Wasser quellfähigen Verdickungsmittels,
0,05 bis 2 Gewichts-% eines schaumhemmenden Mittels,
0,05 bis 0,2 Gewichts-% eines Konservierungsmittels und
0 bis 10 Gewichts-% eines Antifrostmittels enthält.

16. Wirkstoffsuspension gemäss Anspruch 14, dadurch gekennzeichnet, dass sie als Verdickungsmittel Polysaccharid, als schaumhemmendes Mittel Silikonöl, als Konservierungsmittel Formaldehyd oder 1,2-Benzisothiazol-3-on und als Antifrostmittel Aethylenglykol oder Propylenglykol enthält.

17. Wirkstoffsuspension gemäss Anspruch 9, dadurch gekennzeichnet, dass in der Formel III des anionischen Tensids X und Y jeweils für Aethylenbrücken, Z für $R^6$, $M^{\oplus}$ für ein Natriumkation, $m$ und $n$ unabhängig voneinander für Zahlen von 4 bis 11 und $r$ fur eine Zahl von 1 bis 3 stehen.

18. Wirkstoffsuspension gemäss Anspruch 17, dadurch gekennzeichnet, dass $m$ und $n$ die Zahl 6 und $r$ die Zahl 2 bedeuten.

19. Wirkstoffsuspension gemäss Anspruch 1, dadurch gekennzeichnet, dass in der Formel IV des anionischen Tensids $R^{10}$ für Wasserstoff oder Styryl, $A^{\oplus}$ für ein Triäthanolammoniumkation, $s$ für eine Zahl von 1 bis 3 und $t$ für eine Zahl von 10 bis 30 stehen.

20. Wirkstoffsuspension gemäss Anspruch 19, dadurch gekennzeichnet, dass das anionische Tensid der Formel IV durch ein Gemisch von Mono- und Di-(tristyrylphenol-octadecaglykoläther)-phosphorsäureester-triäthanolammoniumsalzen verkörpert sind.

21. Wirkstoffsuspension gemäss Anspruch 1, dadurch gekennzeichnet, dass in der Formel V des anionischen Tensids $B^{\oplus}$ für das Triäthanolammoniumkation und $R^{11}$ für $C_9$-$C_{15}$-Alkyl stehen.

22. Wirkstoffsuspension gemäss Anspruch 1, dadurch gekennzeichnet, dass in der Formel IV des anionischen Tensids $R^{10}$ für $C_3$-$C_{15}$-Alkyl, $A^{\oplus}$ für ein Alkalimetallkation, $s$ für die Zahl eins und $t$ für eine Zahl von 5 bis 13 stehen.

23. Wirkstoffsuspension gemäss Anspruch 1, dadurch gekennzeichnet, dass das anionische Tensid der Formel IV durch ein Gemisch von Mono- und Di-(nonylphenol-nonaglykoläther)-phosphorsäureester-Kaliumsalzen verkörpert wird.

24. Wirkstoffsuspension gemäss Anspruch 1, dadurch gekennzeichnet, dass in der Formel VI des

kationischen Tensids $E^{\ominus}$ für ein Halogenanion, $R^{16}$, $R^{17}$ und $R^{18}$ für Methyl und $R^{19}$ für $C_9$-$C_{15}$-Alkyl stehen.

25. Wirkstoffsuspension gemäss Anspruch 24, dadurch gekennzeichnet, dass das kationische Tensid der Formel VI durch Dodecyltrimethylammoniumchlorid verkörpert wird.

26. Wirkstoffsuspension gemäss Anspruch 1, dadurch gekennzeichnet, dass es
13 bis 25 Gewichts-% Isopropylammoniumsalz des N-Phosphonomethylglycins,
20 bis 35 Gewichts-% 2-Aethylamino-4-tert.butylamino-6-chlor-1,3,5-triazin,
0,3 bis 3 Gewichts-% eines anionichen Tensids der Formel III gemäss Anspruch 16, oder eines Mono- und Di-(tristyrylphenol-octadecaglykoläther)-phosphorsäureester-triäthanolammoniumsalz-Gemisches, oder eines Mono-und Di-(nonylphenol-nonaglykoläther)-phosphorsäureester-Kaliumsalz-Gemisch, oder Dodecylbenzolsulfonsäure-triäthanolammoniumsalz,
0,3 bis 3 Gewichts-% Dodecyltrimethylammoniumchlorid,
0,05 bis 0,2 Gewichts-% Polysaccharid,
0,05 bis 2,0 Gewichts-% Silikonöl,
0,05 bis 0,2 Gewichts-% 1,2-Benzisothiazol-3-on oder einer 37 %igen Formaldehydlösung,
0 bis 10 Gewichts-% Aethylenglykol oder Propylenglykol, und
ad 100 Gewichts-% Wasser enthält.

27. Wirkstoffsuspension gemäss Anspruch 1, dadurch gekennzeichnet, dass sie
21 Gewichts-% Isopropylammoniumsalz des N-Phosphonomethylglycins,
30 Gewichts-% 2-Aethylamino-4-tert.butylamino-6-chlor-1,3,5-triazin,
1,5-Gewichts-% anionisches Tensid gemäss Anspruch 16,
0,5 Gewichts-% Dodecyltrimethylammoniumchlorid,
1,5 Gewichts-% Silikonöl,
0,13 Gewichts-% Polysaccharid,
0,13 Gewichts-% 37 %ige Formaldehydlösung und
ad 100 Gewichts-% Wasser enthält.

28. Wirkstoffsuspension gemäss Anspruch 1, dadurch gekennzeichnet, dass sie
14,5 Gewichts-% Isopropylammoniumsalz des N-Phosphonomethylglycins,
30 Gewichts-% 2-Aethylamino-4-tert.butylamino-6-chlor-1,3,5-triazin,
1,6 Gewichts-% anionisches Tensid gemäss Anspruch 16,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser enthält.

29. Wirkstoffsuspension gemäss Anspruch 1, dadurch gekennzeichnet, dass sie
18 Gewichts-% Isopropylammoniumsalz des N-Phosphonomethylglycins,
31 Gewichts-% 2-Aethylamino-4-tert.butylamino-6-chlor-1,3,5-triazin,
1,6 Gewichts-% anionisches Tensid gemäss Anspruch 16,
0,5 Gewichts-% Dodecyltrimethylammoniumchlorid,
0,8 Gewichts-% Silikonöl,
0,1 Gewichts-% Polysaccharid,
0,1 Gewichts-% 37 %ige Formaldehydlösung und
ad 100 Gewichts-% Wasser enthält.

30. Wirkstoffsuspension gemäss Anspruch 1, dadurch gekennzeichnet, dass sie
21 Gewichts-% Isopropylammoniumsalz des N-Phosphonomethylglycins,
30 Gewichts-% 2-Aethylamino-4-tert.butylamino-6-chlor-1,3,5-triazin,
2 Gewichts-% Mono- und Di-(tristyrylphenol-octadecaglykoläther)-phosphorsäureester-triäthanolammoniumsalz-Gemisch,
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser enthält.

31. Wirkstoffsuspension gemäss Anspruch 1, dadurch gekennzeichnet, dass sie
21 Gewichts-% Isopropylammoniumsalz des N-Phosphonomethylglycins,
30 Gewichts-% 2-Aethylamino-4-tert.butylamino-6-chlor-1,3,5-triazin,
2 Gewichts-% Mono- und Di-(nonylphenol-nonaglykoläther)-phosphorsäureester-Kaliumsalz-Gemische,
0,75 Gewichts-% Dodecyltrimethylammoniumchlorid,
0,1 Gewichts-% Silikonöl,
0,15 Gewichts-% Polysaccharid,
0,10 Gewichts-% 1,2-Benzisothiazol-3-on und
ad 100 Gewichts-% Wasser enthält.

32. Wirkstoffsuspension gemäss Anspruch 1, dadurch gekennzeichnet, dass sie
21 Gewichts-% Isopropylammoniumsalz des N-Phosphonomethylglycins,

30 Gewichts-% 2-Aethylamino-4-tert.butylamino-6-chlor-1,3,5-triazin,
0,75 Gewichts-% Dodecylbenzolsulfonsäure-triäthanolammoniumsalz,
0,9 Gewichts-% Dodecyltrimethylammoniumchlorid,
0,1 Gewichts-% Silikonöl,
0,15 Gewichts-% Polysaccharid,
0,1 Gewichts-% 1,2-Benzisothiazol-3-on und
ad 100 Gewichts-% Wasser enthält.

33. Wirkstoffsuspension gemäss Anspruch 1, dadurch gekennzeichnet, dass sie
21 Gewichts-% Isopropylammoniumsalz des N-Phosphonomethylglycins,
26 Gewichts-% 2-Aethylamino-4-tert.butylamino-6-chlor-1,3,5-triazin,
1,5 Gewichts-% anionisches Tensid gemäss Anspruch 16,
0,5 Gewichts-% Dodecyltrimethylammoniumchlorid,
1,4 Gewichts-% Silikonöl,
0,15 Gewichts-% Polysaccharid,
0,15 Gewichts-% 37 %ige Formaldehydlösung und
ad 100 Gewichts-% Wasser enthält.

34. Verwendung der Wirkstoffsuspension gemäss Anspruch 1 zur Bekämpfung von Unkräuter in mehrjährigen Kulturen.

35. Verwendung gemäss Anspruch 34, dadurch gekennzeichnet, dass es sich bei den behandelten Kulturen im Baumkulturen handelt.

36. Verfahren zur Bekämpfung von Unkräutern in mehrjährigen Kulturen, dadurch gekennzeichnet, dass man auf das Kulturland eine wirksame Menge der Wirkstoffsuspension gemäss Anspruch 1 ausbringt.